# EUROPEAN PATENT APPLICATION

(11) **EP 4 693 005 A1**
(43) Date of publication of application: **11.02.2026**
(21) Application number: 24870168.2
(22) Date of filing: 13.08.2024
(51) Int. Cl.: G06F 3/0481, G06F 3/16

(54) **CROSS-SCREEN CONTROL METHOD AND RELATED DEVICE**

(30) Priority: 28.09.2023 CN 202311294981
(71) Applicant: Huawei Technologies Co., Ltd., Shenzhen, Guangdong 518129 (CN)
(72) Inventor: CHEN, Qimeng, Shenzhen, Guangdong 518129 (CN); SONG, Kaikai, Shenzhen, Guangdong 518129 (CN); ZHOU, Jianhui, Shenzhen, Guangdong 518129 (CN); DONG, Qinghao, Shenzhen, Guangdong 518129 (CN)
(74) Representative: Gill Jennings & Every LLP
(86) International application number: PCT/CN2024/111830
(87) International publication number: WO 2025/066620

(57) **Abstract**

Embodiments of this application provide a cross-screen control method and a related device, and relate to the communication field. The method may be performed by a first device, or may be performed by a chip in the first device. The first device is provided with a first display and a second display. A first operating system runs on the first display and the second display, the first display corresponds to a first user space, and the second display corresponds to a second user space. In the method, a first request sent to the first user space is obtained. The first request is used to request to execute a first task through the second display. A target file corresponding to the first task is determined through the first display. The second display is controlled through a headless system user to output the target file. The headless system user is used to host a system service. In this solution, the second display can be controlled, in a cross-screen manner on the first display based on the headless system user, to execute the first task, without deploying an application on each display of the first device. In this way, the implementation solution is simple.

## Description

This application claims priority to Chinese Patent Application No. 202311294981.0, filed with the China National Intellectual Property Administration on September 28, 2023 and entitled "CROSS-SCREEN CONTROL METHOD AND RELATED DEVICE", which is incorporated herein by reference in its entirety.

### TECHNICAL FIELD

Embodiments of this application relate to the communication field, and in particular, to a cross-screen control method and a related device.

### BACKGROUND

As smart cockpits gradually develop, vendors deploy more screens in the cockpits to support richer audio and video entertainment capabilities, to build the cockpits into "mobile homes".

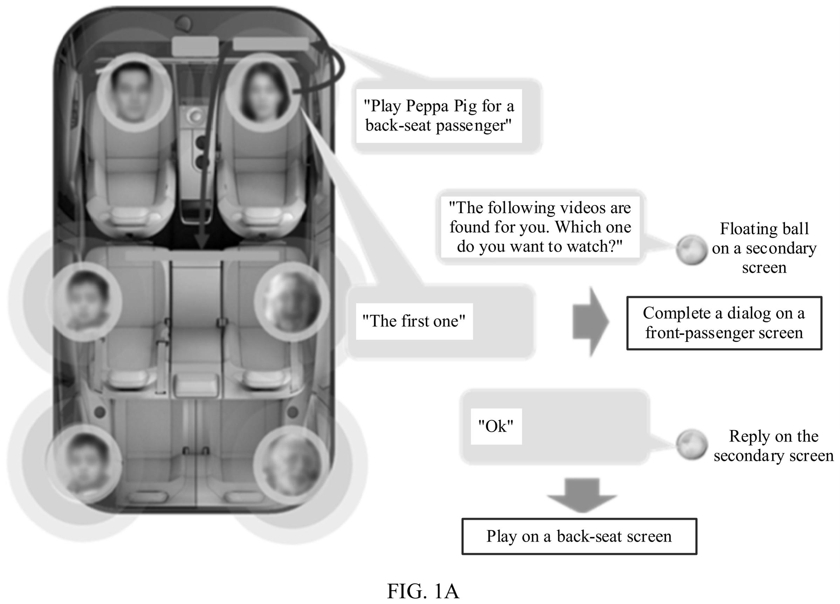

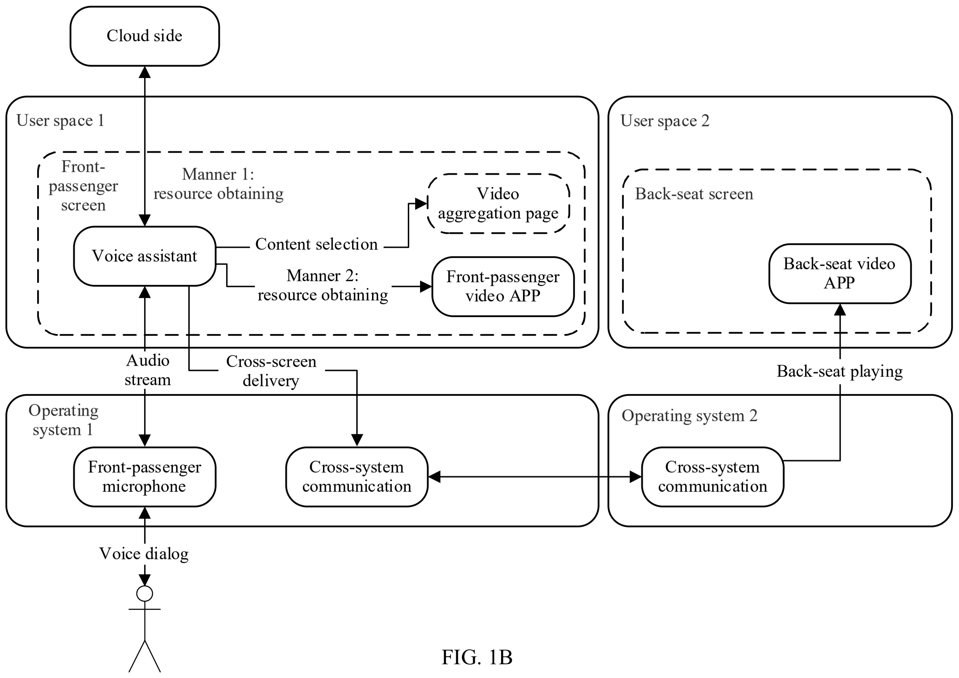

As an important application in the cockpit, a voice assistant can greatly simplify various operations in the cockpit, and improve user experience. For example, FIG. 1A is a diagram of controlling back-seat audio and video entertainment content through a voice assistant according to an embodiment of this application. When a whole family travels (a child sits in a back seat), a front passenger (a parent) controls the audio and video entertainment content on a back-seat screen through the voice assistant on a front-passenger screen, which becomes a rigid-demand scenario. Correspondingly, FIG. 1B is a specific schematic flowchart of controlling back-seat audio and video entertainment content through a voice assistant according to an embodiment of this application. A user may complete selection of a target video on a video aggregation page by performing a voice dialog with the front-passenger voice assistant, and then may play, through cross-screen delivery and cross-system communication, the target video in a back-seat video application (Application, APP) on a back-seat screen. A resource of the video aggregation page may be obtained in a manner 1 and a manner 2. However, in the voice control solution shown in FIG. 1B, an application, for example, a video APP, needs to be deployed on each screen to support a cross-screen operation between a plurality of screen. Consequently, the implementation solution is complex.

### SUMMARY

This application provides a cross-screen control method and a related device, so that cross-screen control can be implemented without deploying an application on each screen of a first device. In this way, an implementation solution is simple.

According to a first aspect, a cross-screen control method is provided. The method may be performed by a first device or a chip in the first device. The first device is provided with a first display and a second display. A first operating system runs on the first display and the second display, the first display corresponds to a first user space, and the second display corresponds to a second user space.

The cross-screen control method includes the following operations: obtaining a first request sent to the first user space, where the first request is used to request to execute a first task through a second display; determining, through the first display, a target file corresponding to the first task; and controlling, through a headless system user, the second display to output the target file. The headless system user is used to host a system service. The target file is output through a first application.

It can be learned that in this solution, the second display can be controlled, in a cross-screen manner on the first display based on the headless system user, to execute the first task, without deploying an application on each display of the first device. In this way, the implementation solution is simple. The first task may be various tasks, and the first task is not limited.

In a possible implementation of the first aspect, determining, through the first display, the target file corresponding to the first task specifically includes the following steps: moving, through the headless system user, a content interface of the first application to the first display for displaying, where the first application is configured in the second user space, and the content interface corresponds to the first request; and determining the target file based on the content interface.

In this solution, the first application runs in the second user space. The content interface of the first application is first moved to the first display, then the target file is determined based on the content interface, and next the second display is controlled through the headless system user to output the target file. This implements cross-screen control. As long as the second display is configured with the first application, cross-screen control can be implemented to execute the first task through the second display. The implementation solution is simple.

In a possible implementation of the first aspect, determining, through the first display, the target file corresponding to the first task specifically includes the following steps: determining a content interface by interacting with a first application through the headless system user. The first application is configured in the first user space, and the content interface corresponds to the first request. The target file is determined based on the content interface.

In this solution, the first application runs in the first user space. The content interface is first determined by interacting with the first application through the headless system user, the target file is then determined based on the content interface, and the target file is output on the second display through the headless system user, to implement cross-screen control. As long as the first display is configured with an application, cross-screen control can be implemented to execute the first task through the second display. The implementation solution is simple.

In a possible implementation of the first aspect, determining the target file based on the content interface specifically includes the following steps: obtaining call stack information of the first application based on the content interface; obtaining control information of the first application based on the call stack information; and determining the target file based on the control information and at least one control operation command.

The call stack information of the first application includes process information (for example, a process stack) of the first application, a source display for the first application or a unique user space code corresponding to the source display, a package name of a program package of the first application, and the like. The control includes a function menu, various buttons, a text, and the like. A simulated tap may be performed based on the control information of the first application and the at least one control operation command, to determine the target file. The control operation command includes but is not limited to selecting a target function, pressing a button, selecting a target file, and the like. The target file can be determined based on the content interface by using an interface-level interaction technology of speaking what you see, thereby effectively simplifying operations that need to be performed by the user when the target file is determined, and improving user experience.

In a possible implementation of the first aspect, determining, through the first display, a target file corresponding to the first task specifically includes the following step: interacting with an aggregation page on the first display to determine the target file. At least one candidate file is displayed on the aggregation page, and the candidate file corresponds to the first request.

In this solution, the target file can be determined by interacting with the aggregation page on the first display. The interaction may be voice interaction, touch interaction, button interaction, or the like. In this application, the aggregation page is provided to determine the target file. The user does not need to frequently switch between different applications to determine the target file, thereby reducing user operations and improving user experience.

In a possible implementation of the first aspect, the cross-screen control method further includes the following steps: obtaining the at least one candidate file from an application on the first display and/or the second display through the headless system user. The aggregation page is generated based on the at least one candidate file.

In this solution, the candidate file may be obtained from a local application of the first device, and then the aggregation page is generated. In this way, a possible method for generating the aggregation page is provided.

In a possible implementation of the first aspect, the cross-screen control method further includes the following steps: obtaining the at least one candidate file from a second device; and generating the aggregation page based on the at least one candidate file.

In this solution, when the first device cannot obtain the candidate file, the first device may obtain the candidate file from the second device, and then generate the aggregation page. In this way, another possible method for generating the aggregation page is provided.

In a possible implementation of the first aspect, the cross-screen control method further includes the following steps: obtaining at least one first candidate file from a second device; obtaining at least one second candidate file from an application on the first display and/or the second display through the headless system user; and generating the aggregation page based on the at least one first candidate file and the at least one second candidate file.

In this solution, the candidate file may be obtained from the local application of the first device and the second device, and then the aggregation page is generated. In this way, another possible method for generating the aggregation page is provided.

In a possible implementation of the first aspect, interacting with the aggregation page on the first display to determine the target file specifically includes the following steps: obtaining call stack information of the aggregation page; obtaining control information of the aggregation page based on the call stack information; and determining the target file based on the control information and at least one control operation command.

In this solution, the target file can be determined based on the aggregation page by using an interface-level interaction technology of speaking what you see, thereby effectively simplifying operations that need to be performed by the user when the target file is determined, and improving user experience.

In a possible implementation of the first aspect, controlling, through the headless system user, the second display to output the target file specifically includes the following steps: controlling, through the headless system user, a first application to output the target file. The first application is configured on the second display.

In this solution, when the first application is configured on the second display, after the target file is determined, the first application may be directly controlled through the headless system user to output the target file. The cross-screen control solution is simple.

In a possible implementation of the first aspect, controlling, through the headless system user, the second display to output the target file specifically includes the following steps: moving the content interface of the first application to the second display for displaying; and controlling, through the headless system user, the first application to output the target file.

In this solution, when the first application is configured on the first display, after the target file is determined, the content interface of the first application may be first moved to the second display for displaying, and then the first application is controlled to output the target file. In this way, a possible method for outputting the target file through the second display is provided.

In a possible implementation of the first aspect, controlling, through the headless system user, the second display to output the target file specifically includes the following steps: controlling, through the headless system user, the first application to output the target file; and moving the content interface of the first application to the second display for displaying.

In this solution, when the first application is configured on the first display, after the target file is determined, the first application may be first controlled to output the target file, and then the content interface of the first application is moved to the second display for displaying. In this way, another possible method for outputting the target file through the second display is provided.

According to a second aspect, this application further provides a first device. The first device includes a unit or a module configured to perform the cross-screen control method according to the first aspect.

According to a third aspect, this application further provides a first device, including a processor and a memory. The processor is connected to the memory, the memory is configured to store program code, and the processor is configured to invoke the program code, to perform the cross-screen control method according to the first aspect.

According to a fourth aspect, this application further provides a computer-readable storage medium. The computer-readable storage medium stores a computer program. When the computer program is executed by a processor, the cross-screen control method according to the first aspect is implemented.

According to a fifth aspect, this application further provides a computer program product including instructions. When the computer program product runs on a computer, the computer is enabled to perform the cross-screen control method according to the first aspect.

According to a sixth aspect, this application further provides a chip. The chip includes a processor and a data interface, and the processor reads, through the data interface, instructions stored in a memory, to perform the cross-screen control method according to the first aspect.

Optionally, in an implementation, the chip may further include the memory. The memory stores the instructions. The processor is configured to execute the instructions stored in the memory. When the instructions are executed, the processor is configured to perform the cross-screen control method according to the first aspect.

### BRIEF DESCRIPTION OF DRAWINGS

The following describes accompanying drawings used in embodiments of this application.
FIG. 1A is a diagram of controlling back-seat audio and video entertainment content through a voice assistant according to an embodiment of this application;
FIG. 1B is a specific schematic flowchart of controlling back-seat audio and video entertainment content through a voice assistant according to an embodiment of this application;
FIG. 1C is a diagram of a first device according to an embodiment of this application;
FIG. 1D is a diagram of a second display according to an embodiment of this application;
FIG. 2 is a schematic flowchart of a cross-screen control method according to an embodiment of this application;
FIG. 3A is a specific schematic flowchart of a cross-screen control method according to an embodiment of this application;
FIG. 3B is a specific schematic flowchart of a cross-screen control method according to an embodiment of this application;
FIG. 3C is a specific schematic flowchart of a cross-screen control method according to an embodiment of this application;
FIG. 3D is a specific schematic flowchart of step 202 according to an embodiment of this application;
FIG. 3E is a specific schematic flowchart of step 222 according to an embodiment of this application;
FIG. 3F is a specific schematic flowchart of step 203 according to an embodiment of this application;
FIG. 3G is another specific schematic flowchart of step 203 according to an embodiment of this application;
FIG. 3H is another specific schematic flowchart of step 202 according to an embodiment of this application;
FIG. 3I is a diagram of an aggregation page according to an embodiment of this application;
FIG. 4 is a diagram of a structure of a first device according to an embodiment of this application; and
FIG. 5 is a diagram of a structure of another first device according to an embodiment of this application.

### DESCRIPTION OF EMBODIMENTS

The following describes technical solutions in this application with reference to the accompanying drawings.

In embodiments of this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. Sequence numbers of steps (for example, step S1 and step S21) in embodiments of this application are merely used to distinguish between different steps, and do not limit an execution sequence of the steps.

In addition, unless otherwise specified, ordinal numbers such as "first" and "second" are used in embodiments of this application to distinguish a plurality of objects, but are not used to limit a sequence, a time sequence, a priority, or an importance degree of the plurality of objects. For example, a first device and a second device are merely for ease of description, and do not indicate a difference of the first device and the second device in terms of a structure and a degree of importance. In some embodiments, the first device and the second device may alternatively be the same device.

Based on the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

Embodiments of this application relate to an application. Therefore, for ease of understanding, the following first describes related concepts such as related terms in embodiments of this application.

### (1) Operating system

The operating system (Operating System, OS) is a set of interrelated system software programs that manage and control computer operations, use and run hardware and software resources, and provide public services to organize user interaction. In a computer, the operating system is the most basic and important system software.

### (2) Application

The application is a computer program used to complete one or more specific tasks. The application runs in a user mode, can interact with a user, and has a visual user interface. Each application runs in an independent process and has its own address space. A boundary between different applications is referred to as a process boundary.

In embodiments of this application, the application (namely, a first application) may be various applications, for example, a multimedia (Multimedia) application, an office application, and an instant messaging application.

Multimedia is a combination of a plurality of media, including a plurality of media forms such as text, sound, and image. In a computer system, the multimedia refers to a human-computer interactive information exchange and dissemination medium that combines two or more media. The media used include texts, pictures, photos, sounds, animations, and videos, as well as interactive functions provided by programs.

Multimedia applications include video applications, audio applications, image editing applications, game applications, and text editing applications (like a Word application and a TXT application). The video applications include video playing applications such as iQIYI, Tencent, Youku, Rednote, Kuaishou, and TikTok, or video editing applications such as CapCut, Miaojian, Aizimu, and Bcut. The audio applications include audio playing applications such as QQ Music, NetEase Music, and Kugou Music, or audio editing applications such as Audio Editing Master and Audio Editor. The image editing applications include Meitu, Pitu, and the like.

Office applications include a text editing application, a PowerPoint (PowerPoint, PPT) application, and an Excel application.

Instant messaging applications include various communication applications such as QQ, WeChat, DingTalk, WeCom, Skype, and Lark.

### (3) User space

The user space is a running space of a user application. In one user space, a plurality of application processes form a group, and the application processes in the group can communicate with each other without obstacles and share data. In embodiments of this application, applications on one display belong to a same user space, and applications in different user spaces cannot directly communicate with each other. Each user space has a unique code (Identity document, ID) for distinguishing different user spaces.

### (4) Headless system user

The headless system user (Headless system user) is used to host all system services. The headless system user needs to always run in a background. A user cannot directly delete or access the headless system user unless a device is set. For example, the user cannot switch to this user type to perform a task like downloading an application or adding an account. Data can be cleared only through factory reset.

The headless system user may be set based on an actual situation, to implement different functions. For example, in embodiments of this application, the headless system user may implement functions such as instruction forwarding and/or resource integration to obtain an aggregation page.

For example, in embodiments of this application, when an application is started, an application status of the application is registered with the headless system user. Further, for example, when an application is registered, a display on which the application is located and a user space ID corresponding to the display are carried.

### (5) Aggregation page

The aggregation page is a page formed by content aggregation. That is, some related things are integrated into a web page, and article content is integrated. To be specific, there is a lot of content around a theme, and the content is integrated into one content, for example, a typical case or Baidu Encyclopedia.

In embodiments of this application, the aggregation page corresponds to a specific request, for example, a first request. For example, if the first request is to play a video, the aggregation page is a video aggregation page. If the first request is to play music, the aggregation page is a music aggregation page. If the first request is to play an article, the aggregation page is an article aggregation page.

### (6) Speak what you see

Speaking what you see is a voice interaction manner. Users do not need to manually touch a screen. Any function option that can be displayed on a smart device can be controlled through voice interaction. This implements "hands-free voice control". For example, in a multimedia application, there is a play button on an interface, and an operation intent is to play a video. The video can be automatically played by simply saying "play a video", to implement a function of speaking what you see.

In a voice control solution shown in FIG. 1B, an application, for example, a video APP, needs to be deployed on each screen to support a cross-screen operation between a plurality of screen. Consequently, the implementation solution is complex.

In this case, this application provides a cross-screen control method. Based on the headless system user, a second display can be controlled to execute a first task through cross-screen control of a first display. Cross-screen control can be implemented without deploying an application on each screen of a first device. In this way, the implementation solution is simple.

The first task may be various tasks, and the first task is not limited. For example, the first task is to play a video, play an audio, display a picture, edit a video, edit an audio, edit a text, modify a PPT, edit an Excel table, or open a chat interface of a social friend in an instant messaging application.

The cross-screen control method in this embodiment of this application may be performed by the first device, or may be performed by a chip in the first device. The first device is provided with a first display and a second display. A first operating system runs on the first display and the second display, the first display corresponds to a first user space, and the second display corresponds to a second user space.

The first device may be a device like a vehicle, a computer, or a television configured with at least two displays.

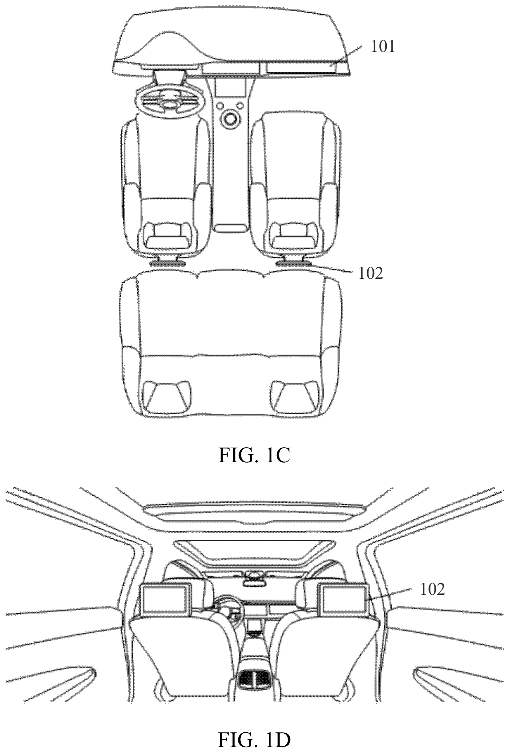

For example, FIG. 1C is a diagram of a first device according to an embodiment of this application. For example, the first device is a vehicle, and the vehicle has a first display 101 and a second display 102. The first display 101 is disposed corresponding to a front-passenger seat. FIG. 1D is a diagram of a second display according to an embodiment of this application. The second display 102 is disposed in a back row. According to the cross-screen control method in this embodiment of this application, a user sitting in the front-passenger seat may control, through the first display 101, the second display 102 to play a video. For example, in a scenario in which a whole family travels, a parent in a front row completes video playing on a back-seat screen by interacting with a voice assistant on a front-seat screen.

The following describes the cross-screen control method in embodiments of this application in detail.

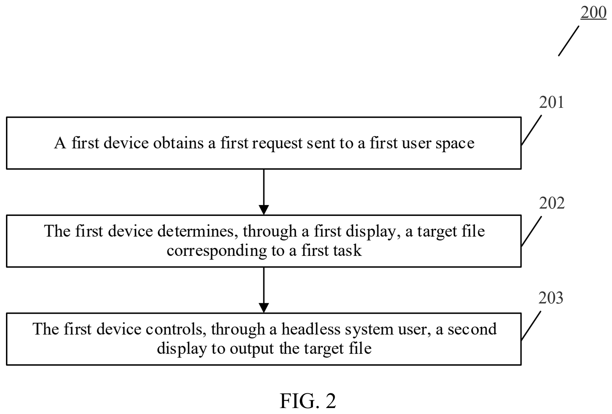

FIG. 2 is a schematic flowchart of a cross-screen control method according to an embodiment of this application. The following uses the first device as an example of an execution body. A cross-screen control method 200 includes the following operations.

201: The first device obtains a first request sent to a first user space.

Specifically, the first request is used to request to execute a first task through a second display.

For example, the first request may be entered in a manner like a voice, a text, a button, or touch.

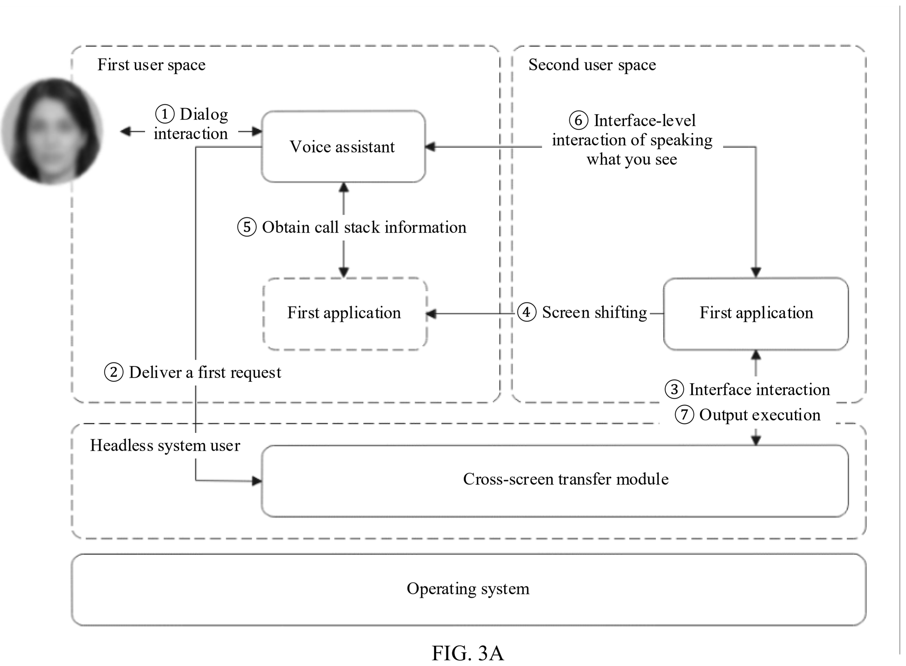

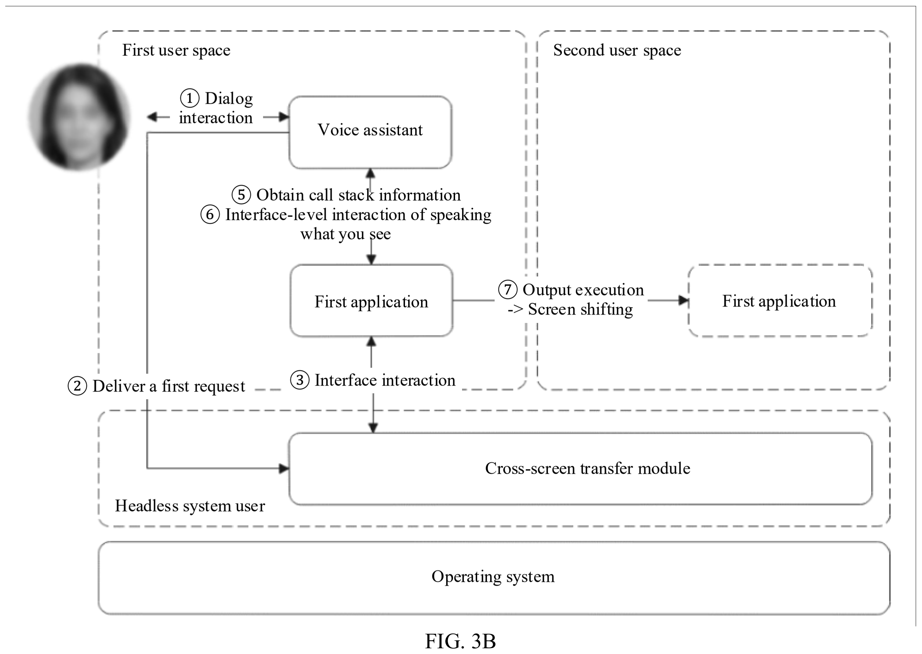

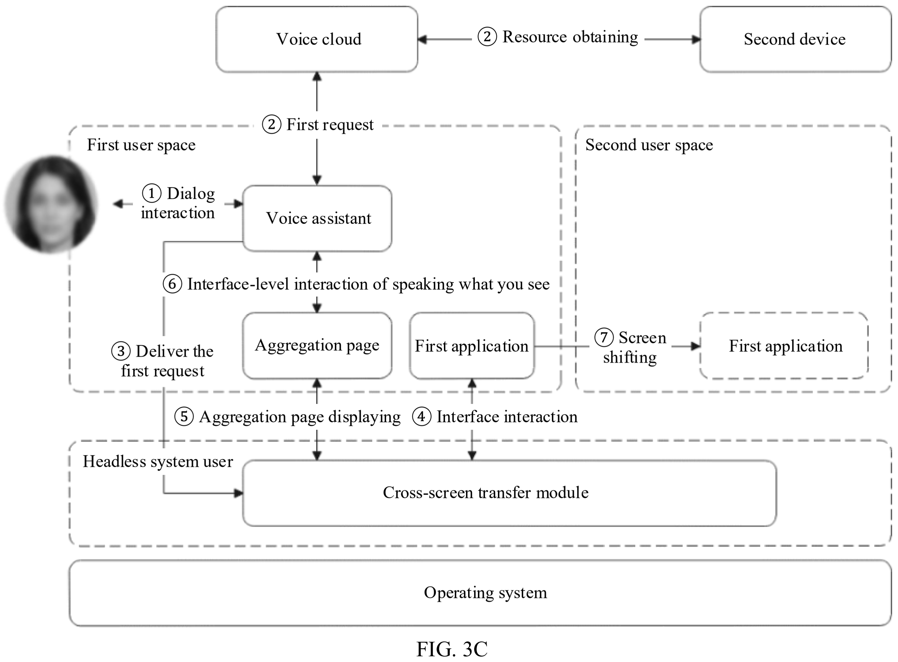

The first request is sent to the first user space through voice interaction. For example, a user may send the first request by saying "Play Peppa Pig for a back-seat passenger" to a voice assistant on a first display. For example, FIG. 3A is a specific schematic flowchart of a cross-screen control method according to an embodiment of this application, FIG. 3B is a specific schematic flowchart of a cross-screen control method according to an embodiment of this application, and FIG. 3C is a specific schematic flowchart of a cross-screen control method according to an embodiment of this application. The user performs dialog interaction with the voice assistant on the first display, that is, may send the first request to the first user space.

For another example, the user may send the first request by entering a text "Play Peppa Pig for a back-seat passenger" in a request input box on the first display.

For another example, the user may send the first request by pressing a button on the first display. For example, when the button is a "play" button, the "play" button is used to request to play a video, music, or the like on the second display.

202: The first device determines, through the first display, a target file corresponding to the first task.

Specifically, the first device may determine the target file through the first display, where the target file corresponds to the first task. In this embodiment of this application, the "file" may also be replaced with an "object." When the first task is to play a video, the target file is a video file or information indicating the video file. The information indicating the video file includes, for example, an address (for example, a playing address) of the video file, and a name and/or a number of the video file. When the first task is to modify a PPT, the target file is a PPT file or information indicating the PPT file. The information indicating the PPT file includes, for example, an address (for example, a storage address) of the PPT file, and a name and/or a number of the PPT file. When the first task is to open a chat interface of a social friend in an instant messaging application, the target file is information that may indicate the social friend, and the information indicating the social friend is, for example, a name and/or a number of the social friend.

203: The first device controls, through a headless system user, the second display to output the target file.

Specifically, the target file is output through a first application, and the first application may be configured on the first display or the second display. When the first task is to play the video, outputting the target file is outputting the video file (for example, playing the video file). When the first task is to modify the PPT, outputting the target file is outputting the PPT file (for example, opening the PPT file). When the first task is to open the chat interface of the social friend of the instant messaging application, outputting the target file is outputting (or opening) the chat interface of the social friend of the instant messaging application.

In this embodiment of this application, the second display can be controlled, in a cross-screen manner on the first display based on the headless system user, to execute the first task, without deploying an application on each display of the first device. In this way, the implementation solution is simple, and ecosystem expansion is friendly. A plurality of displays (for example, the first display and the second display) of the first device run a same operating system, and different displays correspond to different user spaces.

### Implementation 1

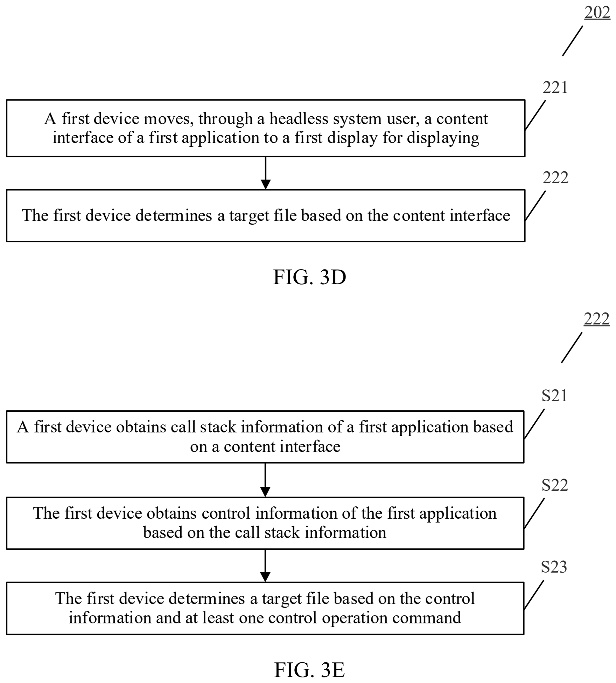

In a possible implementation, FIG. 3D is a specific schematic flowchart of step 202 according to an embodiment of this application. Step 202 specifically includes the following steps.

221: The first device moves, through the headless system user, a content interface of the first application to the first display for displaying.

Specifically, in this embodiment of this application, the first application is configured in a second user space. There may be one or more first applications configured in the second user space. When there are a plurality of first applications, interaction with the user may be performed to determine a specific first application through which the user wants to output the target file, or one of the plurality of first applications may be randomly selected as the first application for outputting the target file.

The content interface corresponds to the first request. When the first request indicates the target file, content in the content interface is the target file. For example, the target file is a target video file (for example, Peppa Pig). When there is one target video file, the content interface is a playing page of the target video file. When there are a plurality of (two or more) target videos, the content interface is a result page of the target videos. The plurality of target videos are displayed on the result page, and the user may specify a target video as a finally output target video. However, when the first request does not indicate the target file, the content page is a home page, a search page, or the like of the first application. The user may specify the target file based on the home page, the search page, or the like. For example, when the first request indicates to play the video but does not specify the target video, the content interface is the home page or the search page of the first application, and the user may interact with the home page or the search page to specify a video as the target video.

In this embodiment of this application, moving the content interface of the first application is moving a control, a pop-up window, an active window, a process, or the like of the first application to the first display, to display the content interface of the first application on the first display.

222: The first device determines the target file based on the content interface.

In this embodiment of this application, the content interface of the first application is first moved to the first display, then the target file is determined based on the content interface, and next the second display is controlled through the headless system user to output the target file. This implements cross-screen control. In this embodiment, as long as the second display is configured with the application, cross-screen control can be implemented to execute the first task through the second display. The implementation solution is simple.

In a possible implementation, step 221 specifically includes the following steps.

The first device delivers the first request to a cross-screen transfer module of the headless system user, and the cross-screen transfer module performs interface interaction with the first application based on the first request, to determine the content interface of the first application. The first device moves, by using a capability of an operating system, the content interface of the first application to the first display for displaying.

Specifically, as shown in FIG. 3A, an example in which the first request is a voice request is used. The first device delivers the first request to the cross-screen transfer module of the headless system user through a voice assistant. The cross-screen transfer module performs interface interaction with the first application based on the first request, to determine the content interface of the first application. The first device moves, by using the capability of the operating system, the content interface of the first application to the first display for displaying.

In a possible implementation, FIG. 3E is a specific schematic flowchart of step 222 according to an embodiment of this application. Step 222 specifically includes the following steps.

S21: The first device obtains call stack information of the first application based on the content interface.

Specifically, the call stack information of the first application may be obtained through an operating system interface based on the content interface of the first application, and the headless system user is not required.

The call stack information of the first application includes process information (for example, a process stack) of the first application, a source display for the first application or a unique user space code corresponding to the source display, a package name of a program package of the first application, and the like. The source display is a display on which the first application originally runs, namely, a display on which the first application is installed.

S22: The first device obtains control information of the first application based on the call stack information.

Specifically, the control includes a function menu, various buttons, a text, and the like.

S23: The first device determines the target file based on the control information and at least one control operation command.

Specifically, the control operation command includes but is not limited to selecting a target function, pressing the button, selecting the target file, and the like. A specific form of the control operation command may be a voice command, a text command, or a button command. The voice command is used as an example. For example, the target file is a video file. When the content interface is the playing page of the target video file, one target video file is displayed in the content interface. The user may give a voice instruction to determine the currently displayed target video file as the target file or search for another video file. When the content interface is the result page of the target video, a plurality of target video files are displayed in the content interface. In this case, the user may give a voice instruction to determine a target video file as the target file or search for another video file.

In an instance, the first device may directly perform interface-level interaction of speaking what you see with the first application based on the call stack information, to be specific, obtain the control information based on the call stack information, and perform a simulated tap based on the control information and the at least one control operation command, to determine the target file.

For example, as shown in FIG. 3A, after obtaining the call stack information, the voice assistant may learn of, based on the call stack information of the first application, a specific screen from which the first application displayed in a foreground of a screen is projected, and then may interact with the first application in a cross-screen manner, to implement interface-level interaction of speaking what you see, thereby completing selection of the target file.

In another instance, the first device may also perform, through the headless system user, interface-level interaction of speaking what you see with the first application. For example, as shown in FIG. 3A, the voice assistant of the first device forwards, to the first application through the headless system user based on the call stack information, a command for obtaining the control information, to obtain the control information of the first application, and then performs simulated tapping based on the control information and the at least one control operation command, to determine the target file. The simulated tapping command is forwarded to the first application through the headless system user.

In this embodiment of this application, the target file can be determined based on the content interface by using an interface-level interaction technology of speaking what you see, thereby effectively simplifying operations that need to be performed by the user when the target file is determined, and improving user experience.

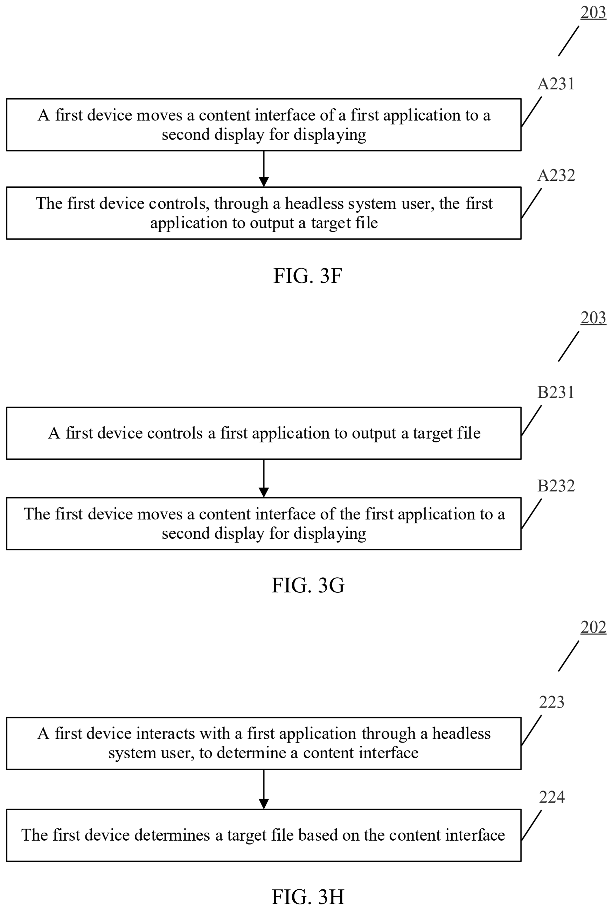

In a possible implementation, FIG. 3F is a specific schematic flowchart of step 203 according to an embodiment of this application. Step 203 specifically includes the following steps.

A231: The first device moves the content interface of the first application to the second display for displaying.

Specifically, the first device moves, by using a capability of an operating system, the content interface of the first application to the second display for displaying.

A232: The first device controls, through the headless system user, the first application to output the target file.

Specifically, as shown in FIG. 3A, the first device forwards, through the headless system user, an output execution command to the first application, to indicate the first application to output the target file.

In this embodiment of this application, when the first application is configured on the first display, after determining the target file, the first device may first move the content interface of the first application to the second display for displaying, and then control the first application to output the target file. In this way, a possible method for outputting the target file through the second display is provided.

In another possible implementation, FIG. 3G is another specific schematic flowchart of step 203 according to an embodiment of this application. Step 203 specifically includes the following steps.

B231: The first device controls the first application to output the target file.

Specifically, the first device may control, by using the interface-level interaction technology of speaking what you see, the first application to output the target file. In this case, the headless system user is not required. Alternatively, the first device controls, through the headless system user, the first application to output the target file. For details, refer to specific descriptions of step A232. Details are not described herein again.

B232: The first device moves the content interface of the first application to the second display for displaying.

For specific descriptions of step B232, refer to specific descriptions of step A231. Details are not described herein again.

In this embodiment of this application, when the first application is configured on the first display, after determining the target file, the first device may first control the first application to output the target file, and then move the content interface of the first application to the second display for displaying. In this way, another possible method for outputting the target file through the second display is provided.

In this embodiment of this application, cross-screen control is supported in a plurality of manners such as application multi-instance (which may be understood as a process) concurrency, application cross-screen transfer, and interface-level interaction of speaking what you see, without deploying an application on each display.

### Implementation 2

In a possible implementation, FIG. 3H is another specific schematic flowchart of step 202 according to an embodiment of this application. Step 202 specifically includes the following steps.

223: The first device interacts with the first application through the headless system user, to determine the content interface.

Specifically, the first application is configured in the first user space, and the content interface corresponds to the first request. For specific descriptions of the first request, refer to related descriptions of step 221. Details are not described herein again.

224: The first device determines the target file based on the content interface.

In this embodiment of this application, the first device first interacts with the first application through the headless system user to determine the content interface, then determines the target file based on the content interface, and then controls, through the headless system user, the second display to output the target file, to implement cross-screen control. As long as the first display is configured with an application, cross-screen control can be implemented to execute the first task through the second display. The implementation solution is simple.

In a possible implementation, step 223 specifically includes the following steps.

The first device delivers the first request to a cross-screen transfer module of the headless system user, and the cross-screen transfer module performs interface interaction with the first application based on the first request, to determine the content interface of the first application.

As shown in FIG. 3B, an example in which the first request is a voice request is used. The first device delivers the first request to the cross-screen transfer module of the headless system user through a voice assistant. The cross-screen transfer module performs interface interaction with the first application based on the first request, to determine the content interface of the first application.

In a possible implementation, as shown in FIG. 3B, step 224 specifically includes the following steps.

The first device obtains the call stack information of the first application based on the content interface.

The first device obtains the control information of the first application based on the call stack information.

The first device determines the target file based on the control information and the at least one control operation command.

Specifically, for specific descriptions of step 224, refer to related descriptions in FIG. 3E. Details are not described herein again.

In a possible implementation, step 203 specifically includes the following steps.

The first device moves the content interface of the first application to the second display for displaying.

The first device controls, through the headless system user, the first application to output the target file.

In this embodiment of this application, when the first application is configured on the first display, after determining the target file, the first device may first move the content interface of the first application to the second display for displaying, and then control the first application to output the target file. In this way, a possible method for outputting the target file through the second display is provided. For specific descriptions of step 203, refer to related descriptions in FIG. 3F. Details are not described herein again.

In a possible implementation, as shown in FIG. 3B, step 203 specifically includes the following steps.

The first device controls the first application to output the target file.

Specifically, refer to related descriptions in step B231. Details are not described again.

The first device moves the content interface of the first application to the second display for displaying.

Specifically, refer to related descriptions in step B232. Details are not described again.

In this embodiment of this application, when the first application is configured on the first display, after determining the target file, the first device may first control the first application to output the target file, and then move the content interface of the first application to the second display for displaying. In this way, another possible method for outputting the target file through the second display is provided.

As shown in FIG. 3B, in this embodiment of this application, an application is deployed on only the first display, the voice assistant interacts with only the application on the first display, and the application is displayed on another screen (for example, the second display) through cross-screen transfer, to implement cross-screen control.

### Implementation 3

In a possible implementation, step 202 specifically includes the following steps.

The first device interacts with an aggregation page on the first display to determine the target file.

Specifically, the first device may obtain the corresponding aggregation page based on the first request. At least one candidate file (or candidate object) is displayed on the aggregation page, and the candidate file corresponds to the first request. The interaction may be voice interaction, touch interaction, button interaction, or the like. In this embodiment of this application, the candidate file displayed on the aggregation page may be the candidate file or information that can indicate the candidate file. The information indicating the candidate file is, for example, an address (for example, a playing address) of the candidate file, and a name and/or a number of the candidate file.

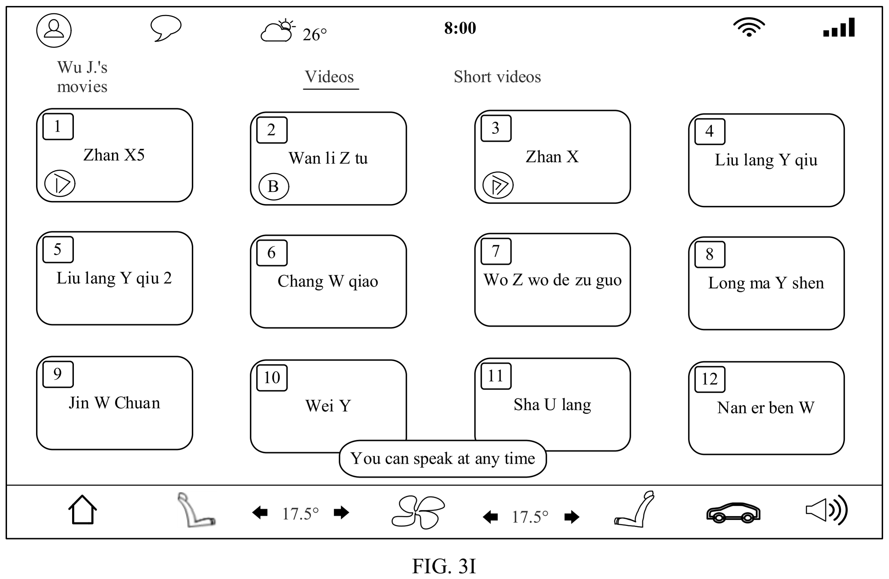

For example, the first request is a request for playing a video. The first request is "playing a movie of Wu J", and FIG. 3I is a diagram of an aggregation page according to an embodiment of this application. An aggregation page corresponding to "playing a movie of Wu J" is shown in FIG. 3I. Candidate files in the aggregation page include "Zhan X5", "Wan li Z tu", "Zhan X", "Liu lang Y qiu", and the like. An upper left corner of each candidate file is a number of the candidate file, for example, 1, 2, 3, or 4. When a playing application of the candidate file is not a local application, a corresponding playing application, for example, Bilibili or Youku, is marked in a lower left corner of the candidate file.

For example, when the candidate file is a video file, as shown in FIG. 3I, only a video snapshot of each candidate file is displayed on the aggregation page. When the target file is controlled to be output, the user only needs to indicate a number of the candidate file to determine the target file. The first device may obtain a name of the candidate file (namely, the target file in this case) based on the number of the candidate file, and then control output of the target file based on the name of the target file.

For example, when the candidate file is a music file, only a name and a file number of each candidate file are displayed on the aggregation page.

In this embodiment of this application, the target file can be determined by interacting with the aggregation page on the first display. This application provides the aggregation page to determine the target file. The user does not need to frequently switch between different applications to determine the target file, thereby reducing user operations and improving user experience.

In a possible implementation, the cross-screen control method further includes the following steps.

S1: The first device obtains at least one candidate file from an application on the first display and/or the second display through the headless system user.

Specifically, the candidate file is obtained from a local application of the first device. In this embodiment of this application, the obtained candidate file may be the candidate file or information that can indicate the candidate file. The information indicating the candidate file is, for example, an address (for example, a playing address) of the candidate file, and a name and/or a number of the candidate file. For example, when the candidate file is a video file, obtaining the candidate file may be understood as obtaining a playing address of the video file. When the candidate file is a music file, obtaining the candidate file may be understood as obtaining a playing address corresponding to the music file.

A type of the local application corresponds to the first request. For example, if the first request is a request for playing a video, the local application is a local video application. If the first request is a request for playing music, the local application is a local music application.

For example, as shown in FIG. 3C, the voice assistant of the first device delivers the first request to the cross-screen transfer module of the headless system user, and the cross-screen transfer module obtains the candidate file based on the first request and an application status of the first device. Specifically, an application type indicated by the first request is first determined, and then interface interaction is performed with the first application corresponding to the application type, to obtain the candidate file in the first application.

S2: The first device generates the aggregation page based on the at least one candidate file.

In this embodiment of this application, the first device obtains the candidate file from the local application, and then generates the aggregation page. In this way, a possible method for generating the aggregation page is provided.

In another possible implementation, the cross-screen control method further includes the following steps.

S3: The first device obtains the at least one candidate file from a second device.

Specifically, the second device may be another device like a server. In this embodiment of this application, the candidate file may be the candidate file or information that can indicate the candidate file. The information indicating the candidate file is, for example, an address (for example, a playing address) of the candidate file, and a name and/or a number of the candidate file.

For example, as shown in FIG. 3C, the first device sends the first request to a voice cloud server through the voice assistant, and the voice cloud server obtains a resource, namely, the candidate file, from the second device based on the first request. When the candidate file is a video file, a specific form of the candidate file may be a playing address of a video. The video file has a large data amount. Transmitting the playing address can effectively reduce a data amount to be transmitted, and improve a response speed of cross-screen control.

S4: The first device generates the aggregation page based on the at least one candidate file.

In this embodiment of this application, when the first device cannot obtain the candidate file, the first device may obtain the candidate file from the second device, and then generate the aggregation page. In this way, another possible method for generating the aggregation page is provided.

In another possible implementation, the cross-screen control method further includes the following steps.

S5: The first device obtains at least one first candidate file from the second device.

S6: The first device obtains at least one second candidate file from an application on the first display and/or the second display through the headless system user.

Step S5 and step S6 may be performed in a reverse order, or the two steps may be performed simultaneously.

S7: The first device generates the aggregation page based on the at least one first candidate file and the at least one second candidate file.

Specifically, after obtaining the at least one first candidate file from the second device, the first device indicates the first candidate file to the cross-screen transfer module of the headless system user. As shown in FIG. 3C, after obtaining the at least one first candidate file, the voice assistant of the first device may send the first request to the headless system user, and the first candidate file may be carried in the first request. The cross-screen transfer module may obtain the at least one second candidate file. In this way, the cross-screen transfer module may aggregate the first candidate file and the second candidate file to generate the aggregation page.

In this embodiment of this application, the first candidate file and the second candidate file may be the candidate file or information that can indicate the candidate file. The information indicating the candidate file is, for example, an address (for example, a playing address) of the candidate file, and a name and/or a number of the candidate file.

In this embodiment of this application, the candidate file may be obtained from the local application of the first device and the second device, and the aggregation page is generated. In this way, another possible method for generating the aggregation page is provided.

In a possible implementation, interacting with the aggregation page on the first display to determine the target file specifically includes the following steps.

The first device obtains call stack information of the aggregation page.

The first device obtains control information of the aggregation page based on the call stack information.

The first device determines the target file based on the control information and at least one control operation command.

In this embodiment of this application, the target file can be determined based on the aggregation page by using an interface-level interaction technology of speaking what you see, thereby effectively simplifying operations that need to be performed by the user when the target file is determined, and improving user experience. For specific descriptions, refer to related descriptions in FIG. 3E. Details are not described herein again.

In a possible implementation, step 203 specifically includes the following steps.

The first device controls, through the headless system user, the first application to output the target file. The first application is configured on the second display.

Specifically, the first device forwards an output execution command to the first application through the headless system user, and the first application outputs the target file in response to the output execution command. In this embodiment, there may be one or more first applications. When there are a plurality of first applications, the user may specify one first application as an application for outputting the target file.

In this embodiment of this application, when the first application is configured on the second display, after the target file is determined, the first application may be directly controlled through the headless system user to output the target file. The cross-screen control solution is simple.

In a possible implementation, step 203 specifically includes the following steps.

The first device moves the content interface of the first application to the second display for displaying.

The first device controls, through the headless system user, the first application to output the target file.

In this embodiment of this application, when the first application is configured on the first display, after the target file is determined, the content interface of the first application may be first moved to the second display for displaying, and then the first application is controlled to output the target file. A possible method for outputting the target file through the second display is provided. For specific descriptions of step 203, refer to related descriptions in FIG. 3F. Details are not described herein again.

In a possible implementation, as shown in FIG. 3C, step 203 specifically includes the following steps.

The first device controls the first application to output the target file (not shown in FIG. 3C).

Specifically, refer to related descriptions in step B231. Details are not described again.

The first device moves the content interface of the first application to the second display for displaying.

Specifically, refer to related descriptions in step B232. Details are not described again.

In this embodiment of this application, when the first application is configured on the first display, after the target file is determined, the first application may be first controlled to output the target file, and then the content interface of the first application is moved to the second display for displaying. In this way, another possible method for outputting the target file through the second display is provided.

As shown in FIG. 3C, in this embodiment, the voice assistant interacts only with the aggregation page of the first display, and displays effect on another screen through cross-screen transfer.

The foregoing describes in detail methods in embodiments of this application. The following describes an apparatus provided in embodiments of this application.

This application further provides a first device. The first device includes a unit or module configured to perform the cross-screen control method in any one of the foregoing embodiments.

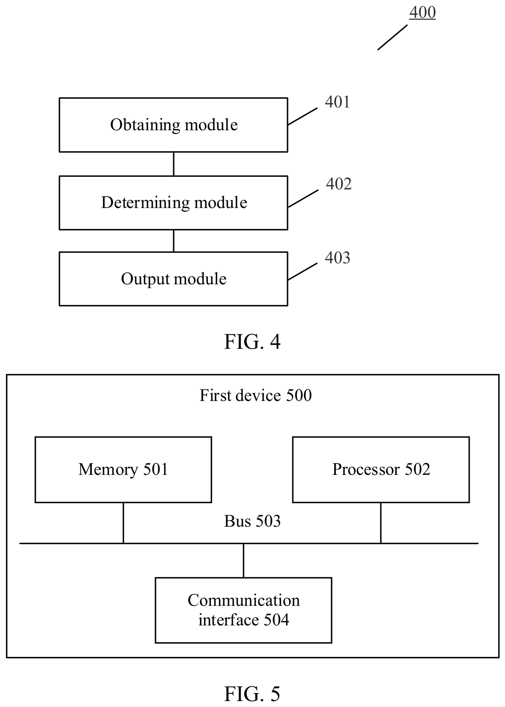

FIG. 4 is a diagram of a structure of a possible apparatus according to an embodiment of this application. The first device shown in FIG. 4 may be configured to implement functions of the foregoing cross-screen control method embodiments, and therefore can also implement beneficial effect of the foregoing cross-screen control method embodiments. In this embodiment of this application, the first device may be an electronic device, or may be a module (for example, a chip) used in the electronic device.

As shown in FIG. 4, a first device 400 includes an obtaining module 401, a determining module 402, and an output module 403. The first device 400 is configured to implement functions of the cross-screen control method embodiments shown in FIG. 2. Alternatively, the first device 400 may include a module configured to implement any function or operation in the cross-screen control method embodiments shown in FIG. 2. The module may be completely or partially implemented by using software, hardware, firmware, or any combination thereof.

The first device 400 is provided with a first display and a second display. A first operating system runs on the first display and the second display, the first display corresponds to a first user space, and the second display corresponds to a second user space.

When the first device 400 is configured to implement the functions in the method embodiment shown in FIG. 2, the obtaining module 401 is configured to obtain a first request sent to a first user space. The first request is used to request to execute a first task through a second display. The determining module 402 is configured to determine, through the first display, a target file corresponding to the first task. The output module 403 is configured to output the target file on the second display through a headless system user. The headless system user is used to host a system service. The target file is output through a first application.

It can be learned that in this embodiment of this application, the first device 400 may implement, based on the headless system user, cross-screen control on the second display to execute the first task on the first display, without deploying an application on each display of the first device. In this way, the implementation solution is simple.

In a possible implementation, the determining module 402 is specifically configured to move, through the headless system user, a content interface of the first application to the first display for displaying. The first application is configured in a second user space, and the content interface corresponds to the first request. The target file is determined based on the content interface.

In a possible implementation, the determining module 402 is specifically configured to interact with the first application through the headless system user to determine the content interface. The first application is configured in the first user space, and the content interface corresponds to the first request. The target file is determined based on the content interface.

In a possible implementation, the determining module 402 is specifically configured to: obtain call stack information of the first application based on the content interface; obtain control information of the first application based on the call stack information; and determine the target file based on the control information and at least one control operation command.

In a possible implementation, the determining module 402 is specifically configured to interact with an aggregation page on the first display to determine the target file. At least one candidate file is displayed on the aggregation page, and the candidate file corresponds to the first request.

In a possible implementation, the obtaining module 401 is further configured to obtain the at least one candidate file from an application on the first display and/or the second display through the headless system user. The first device 400 further includes a generation module. The generation module is configured to generate the aggregation page based on the at least one candidate file.

In another possible implementation, the obtaining module 401 is further configured to obtain the at least one candidate file from a second device. The generation module is configured to generate the aggregation page based on the at least one candidate file.

In another possible implementation, the obtaining module 401 is further configured to: obtain at least one first candidate file from the second device; and obtain at least one second candidate file from an application on the first display and/or the second display through the headless system user. The generation module is configured to generate the aggregation page based on the at least one first candidate file and the at least one second candidate file.

In a possible implementation, when interacting with the aggregation page on the first display to determine the target file, the determining module 402 is specifically configured to: obtain call stack information of the aggregation page; obtaining control information of the aggregation page based on the call stack information; and determine the target file based on the control information and at least one control operation command.

In a possible implementation, the output module 403 is specifically configured to control, through the headless system user, the first application to output the target file. The first application is configured on the second display.

In another possible implementation, the output module 403 is specifically configured to: move the content interface of the first application to the second display for displaying; and control, through the headless system user, the first application to output the target file.

In a possible implementation, the output module 403 is specifically configured to: control, through the headless system user, the first application to output the target file; and move the content interface of the first application to the second display for displaying.

For descriptions of the foregoing modules, refer to the descriptions of the foregoing embodiments. Details are not described herein again.

FIG. 5 is a diagram of a structure of another first device according to an embodiment of this application. This application further provides a first device. A first device 500 includes a memory 501, a processor 502, a communication interface 504, and a bus 503. The memory 501, the processor 502, and the communication interface 504 are communicatively connected to each other through the bus 503.

Optionally, the first device 500 further includes at least two displays (not shown), for example, a first display and a second display. The displays are communicatively connected to the memory 501, the processor 502, and the communication interface 504 through the bus 503. The display is configured to output information to interact with a user. Optionally, the first device further includes an output module (not shown). The output module is communicatively connected to the memory 501, the processor 502, and the communication interface 504 through the bus 503. The output module is configured to output an audio. The output module may be a speaker. For example, after determining a target file, the first device 500 may output the target file through the output module, for example, through voice outputting or display outputting.

The memory 501 may be a read-only memory (Read-Only Memory, ROM), a static storage device, a dynamic storage device, or a random access memory (Random Access Memory, RAM). The memory 501 may store a program. When the program stored in the memory 501 is executed by the processor 502, the processor 502 and the communication interface 504 are configured to perform steps of the cross-screen control method in any embodiment of this application.

The processor 502 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement a function that needs to be performed by a unit in the first device in any embodiment of this application, or perform the cross-screen control method in any embodiment of this application.

Alternatively, the processor 502 may be an integrated circuit chip and has a signal processing capability. In an implementation process, the steps of the cross-screen control method in any embodiment of this application may be completed by using a hardware integrated logic circuit in the processor 502, or by using instructions in a form of software. The processor 502 may be a general-purpose processor, a digital signal processor (Digital Signal Processing, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the cross-screen control method in any embodiment of this application may be directly executed and completed by a hardware processor, or may be executed and completed by using a combination of hardware in the processor and a software module. A software module may be in a mature storage medium in the art, for example, a random access memory, a flash memory, a read-only memory, a programmable read-only memory, an electrically erasable programmable memory, or a register. The storage medium is in the memory 501. The processor 502 reads information in the memory 501, and completes, in combination with hardware of the processor 502, functions that need to be performed by units included in the first device in any embodiment of this application, or performs the cross-screen control method in any embodiment of this application.

The communication interface 504 uses a transceiver apparatus, for example, but not limited to a transceiver, to implement communication between the first device 500 and another device or a communication network. For example, the candidate file may be obtained through the communication interface 504.

The bus 503 may include a path for transmitting information between components (for example, the memory 501, the processor 502, and the communication interface 504) of the first device 500. In the several embodiments provided in this application, it should be understood that the disclosed apparatus and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a read-only memory (Read-only Memory, ROM), a random access memory (Random Access Memory, RAM), or a magnetic medium, for example, a floppy disk, a hard disk, a magnetic tape, a magnetic disk, or an optical medium, for example, a digital versatile disc (Digital Versatile Disc, DVD), or a semiconductor medium, for example, a solid state disk (Solid State Disk, SSD).

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cross-screen control method, wherein the method is applied to a first device, the first device is provided with a first display and a second display, a first operating system runs on the first display and the second display, the first display corresponds to a first user space, the second display corresponds to a second user space, and the method comprises:
obtaining a first request sent to the first user space, wherein the first request is used to request to execute a first task through the second display;
determining, through the first display, a target file corresponding to the first task; and
controlling, through a headless system user, the second display to output the target file, wherein the headless system user is used to host a system service.

2. The method according to claim 1, wherein determining, through the first display, the target file corresponding to the first task comprises:
moving, through the headless system user, a content interface of a first application to the first display for displaying, wherein the first application is configured in the second user space, and the content interface corresponds to the first request; and
determining the target file based on the content interface.

3. The method according to claim 1, wherein determining, through the first display, the target file corresponding to the first task comprises:
interacting, through the headless system user, with a first application to determine a content interface, wherein the first application is configured in the first user space, and the content interface corresponds to the first request; and
determining the target file based on the content interface.

4. The method according to claim 2 or 3, wherein determining the target file based on the content interface comprises:
obtaining call stack information of the first application based on the content interface;
obtaining control information of the first application based on the call stack information; and
determining the target file based on the control information and at least one control operation command.

5. The method according to claim 1, wherein determining, through the first display, the target file corresponding to the first task comprises:
interacting with an aggregation page on the first display to determine the target file, wherein at least one candidate file is displayed on aggregation page, and the candidate file corresponds to the first request.

6. The method according to claim 5, wherein the method further comprises:
obtaining the at least one candidate file from a second device; and
generating the aggregation page based on the at least one candidate file.

7. The method according to claim 5, wherein the method further comprises:
obtaining the at least one candidate file from an application on the first display and/or the second display through the headless system user; and
generating the aggregation page based on the at least one candidate file.

8. The method according to claim 5, wherein the method further comprises:
obtaining at least one first candidate file from a second device;
obtaining at least one second candidate file from an application on the first display and/or the second display through the headless system user; and
generating the aggregation page based on the at least one first candidate file and the at least one second candidate file.

9. The method according to any one of claims 5 to 8, wherein interacting with the aggregation page on the first display to determine the target file comprises:
obtaining call stack information of the aggregation page;
obtaining control information of the aggregation page based on the call stack information; and
determining the target file based on the control information and at least one control operation command.

10. The method according to any one of claims 5 to 9, wherein controlling, through the headless system user, the second display to output the target file comprises:
controlling, through the headless system user, a first application to output the target file, wherein the first application is configured on the second display.

11. The method according to any one of claims 1 to 9, wherein controlling, through the headless system user, the second display to output the target file comprises:
moving the content interface of the first application to the second display for displaying; and
controlling, through the headless system user, the first application to output the target file.

12. The method according to any one of claims 1 to 9, wherein controlling, through the headless system user, the second display to output the target file comprises:
controlling, through the headless system user, the first application to output the target file; and
moving the content interface of the first application to the second display for displaying.

13. A first device, wherein the first device comprises a unit or a module configured to perform the cross-screen control method according to any one of claims 1 to 12.

14. A first device, comprising a processor and a memory, wherein the processor is connected to the memory, the memory is configured to store program code, and the processor is configured to invoke the program code, to perform the cross-screen control method according to any one of claims 1 to 12.

15. A computer-readable storage medium, wherein the computer-readable storage medium stores a computer program; and the computer program is executed by a processor to implement the cross-screen control method according to any one of claims 1 to 12.
